Europäisches Patentamt

(19) European Patent Office     (11) Publication number:     **0 108 680**

Office européen des brevets     **A1**

(12) **EUROPEAN PATENT APPLICATION**

(21) Application number: 83402089.3     (51) Int. Cl.³: **F 16 D 55/224**
                                              **F 16 D 65/02**

(22) Date of filing: 26.10.83

(30) Priority: 01.11.82 US 438084

(43) Date of publication of application:
   16.05.84 Bulletin 84/20

(84) Designated Contracting States:
   DE FR GB IT

(71) Applicant: THE BENDIX CORPORATION
   Executive Offices Bendix Center
   Southfield Michigan 48037(US)

(72) Inventor: Ritsema, Irving R.
   24222 US 20
   South Bend, IN. 46628(US)

(72) Inventor: Bach, Lloyd G.
   61500 Greentree Dr.
   South Bend, IN. 46614(US)

(74) Representative: Timoney, Ian Charles Craig et al,
   Service Brevets Bendix 44, rue François 1er
   F-75008 Paris(FR)

(54) A caliper for a disc brake and a method for manufacturing the same.

㊼ A caliper (12) is formed with a pair of stamped members
(30, 32) which are joined together to form one bore (52) for
receiving a hydraulic actuator and also another bore (50) for
receiving a pin assembly (20).

Fig. 2

## A CALIPER FOR A DISC BRAKE AND
## THE METHOD FOR MANUFACTURING THE SAME

This invention relates to a caliper for a disc brake, wherein the caliper is adapted to cooperate with a pair of friction elements which are engageable with the disc to retard rotation of the latter.

A caliper for a disc brake assembly, the caliper being movable relative to a torque plate during braking by at least one pin assembly, and the caliper including a hydraulic actuator which is adapted to receive fluid pressure during braking to move the caliper, and the caliper including a pair of stamped members fastened together to couple the hydraulic actuator to the caliper.

It is known that a pair of plates can be secured together to form a chordal member which carries a cylinder and includes a central opening for receiving a pair of friction elements. In order to support the cylinder and chordal plates, the cylinder is provided with grooves receiving the chordal member and a torque plate is provided with grooves also receiving the chordal member. These torque and groove connections do not provide ,the free floating movement desired for a disc brake and separate operations are necessary to provide the grooves on the cylinder.

The caliper of this invention is characterized by said pair of stamped members cooperating with each other to define a first bore and said hydraulic actuator comprising a cylinder which is adapted to fit within said first bore, and said pair of stamped members further cooperating with each other to define a second bore and said one pin assembly is received within said second bore.

It is an advantage of the present invention that the pair of stamped members are provided with cylinder and pin assembly receiving portions during the stamping operation at the same time.

The invention will now be described with reference to the accompanying drawings in which :

 - Figure 1 is a general view of a caliper of a disc brake assembly ; and

 - Figure 2 is a perspective detailed view of the caliper of Figure 1.

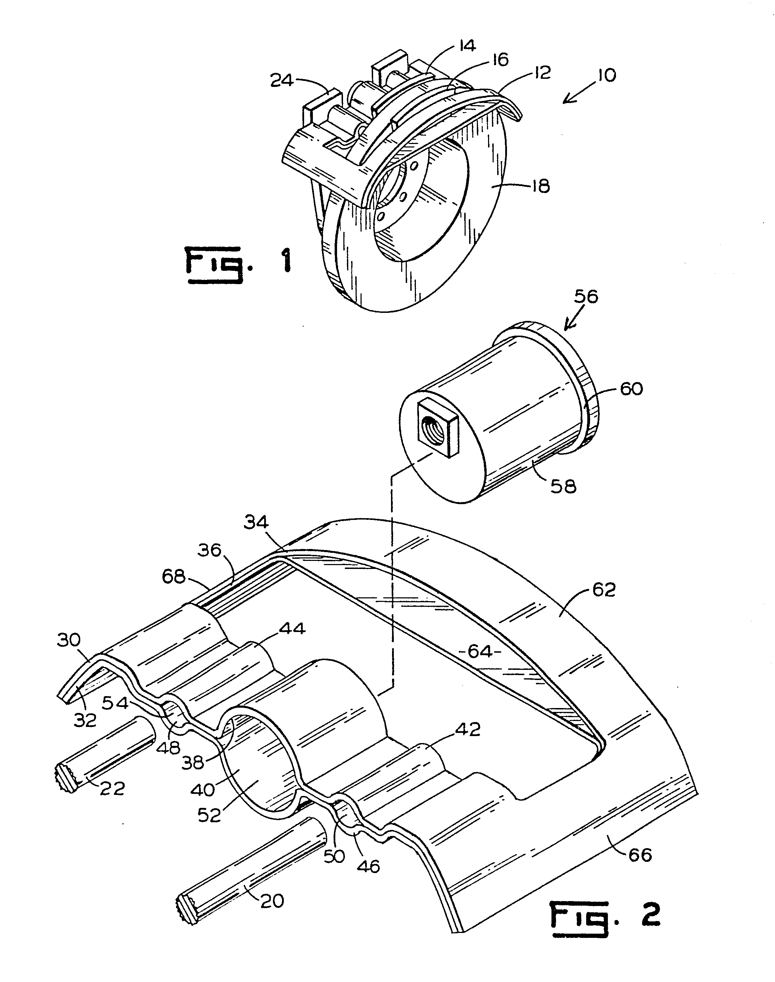

The disc brake assembly 10 includes a caliper 12 cooperating with a pair of friction pads 14 and 16 to engage the latter with a disc 18 to be braked. The caliper 12 is movably carried on a pair of pin assemblies 20 and 22 which, in turn, are fastened to a torque taking member 24 by any suitable means. The pair of friction pads 14 and 16 can either transmit torque directly to the torque member, or to the caliper, or to both, as is well known in the art. For purposes of illustration, the torque member is merely shown in Figure 1 as a U-shaped member; however, other structures for the torque member are feasible with the caliper hereinafter described.

In accordance with the invention, the caliper 12 is formed by a pair of stamped members 30 and 32. The top member 30 and the bottom member 32 are provided with matching central openings 34 and 36. The top member 30 is stamped from a flat sheet to form a middle half cylindrical surface 38, while the bottom member 32 is stamped from a flat sheet to form a half cylindrical surface 40. A pair of smaller half cylindrical surfaces at 42, 44 and 46, 48 are simultaneously formed on the top and bottom members, respectively, with the middle half cylindrical surfaces 38 and 40. When the top member 30 is fastened to the bottom member 32 via welding or other suitable means, the surfaces 42, 38 and 44 align with the surfaces 46, 40 and 48, respectively, to form bores 50, 52 and 54.

A cylinder or hydraulic actuator 56 is adapted to receive fluid pressure to move a piston relative to the cylinder. A cylindrical outer surface 58 on the cylinder 56 leads to a shoulder 60. The radial dimension for the surface 58 is the same as, or slightly smaller, than the radial dimension for the bore 52. In order to attach the cylinder 56 to the fastened members 30 and 32, the cylinder is first positioned within the central openings 34 and 36 so that the surface 58 aligns with the wall of bore 52 or surfaces 38 and 40. The cylinder is then moved into the bore 52 until the shoulder engages the edges of the central openings 34 and 36.

With the cylinder 56 attached to the fastened members, the fastened members can be disposed adjacent the torque-taking member so that the cylinder 56 opposes the pad 14 and a reaction portion 62 of the stamped members opposes the pad 16. The reaction portion 62 is formed by the members 30 and 32 with a radial spacing 64 therebetween extending substantially between the connecting legs 66 and 68 formed by the members 30 and 32. When the bores 50 and 54 are aligned with suitable openings on the torque-taking member 24, it is possible for the pin assemblies 20 and 22 to be

inserted into the respective bores 50 and 54 and engage the suitable openings.  The pin assemblies serve to slidably support the caliper 12 for movement in an axial direction relative to the disc and torque-taking member during braking.

Although the foregoing description proceeds with reference to a pair of stamped members, it is feasible to form the members by other manufacturing operations than stamping so long as the pin assembly bores and the cylinder bore are formed by the pair of members when the latter are joined together.

## C L A I M S

1. A caliper for a disc brake assembly, the caliper (12) being movable relative to a torque plate (24) during braking by at least one pin assembly (20), and the caliper including a hydraulic actuator (56) which is adapted to recei fluid pressure during braking to move the caliper, and the caliper including a pair of stamped members (30, 32) fastened together to couple the hydraulic actuator to the caliper, characterized by said pair of stamped members (30, 32) cooperating with each other to define a first bore (52) and said hydraulic actuator comprising a cylinder (58) which is adapted to fit within said first bore (52), and said pair of stamped members further cooperating with each other to define second bore (50) and said one pin assembly (20) is received within said second bore (50).

2. The caliper of claim 1 in which said pair of stamped members cooperate to form a third bore (54) and a second pin assembly (22) is received within said third bore (54).

3. The caliper of claim 1 in which said cylinder is provided with a shoulder (60) abutting said pair of stamped members (30, 32).

4. The caliper of claim 1 in which said pair of stamped members (30, 32) define a central opening (34) when fastened together and said cylinder (58) is disposed within said central opening (34) before said cylinder (58) is fitted within said first bore (52).

5. The caliper of claim 1 in which said pair of stamped members (30, 32) define a spacing (64) therebetween opposite from said first bore (52) and said spacing (64) extends transversely between a pair of connecting arms (66, 6

6. A method for manufacturing a caliper (12) comprising the steps of providing a pair of stamped members (30, 32), each of said stamped members defining a central opening (34) and a plurality of half-cylindrical surfaces (38 40, 42, 46), fastening said pair of stamped members together, whereby each half-cylindrical surface on one member is matche with a corresponding half-cylindrical surface on the other

0108680

member to form at least two bores (52, 50) between said fastened stamped members, one of said bores (52) being capable of receiving a hydraulic actuator (56), and another of said bores (50) being capable of receiving a pin assembly (20) which serves to mount said caliper (12) in its operative environment

Fig. 1

Fig. 2

European Patent Office

**EUROPEAN SEARCH REPORT**

| Category | DOCUMENTS CONSIDERED TO BE RELEVANT | EP 83402089.3 |
|---|---|---|

| Category | Citation of document with indication, where appropriate, of relevant passages | Relevant to claim | CLASSIFICATION OF THE APPLICATION (Int. Cl. ³) |
|---|---|---|---|
| X | DE - B - 1 189 333 (ALFRED TEVES)<br>* Totality * | 1,3,4,6 | F 16 D 55/224<br>F 16 D 65/02 |
| A | US - A - 3 532 192 (FALK)<br>* Totality * | | |
| A | US - A - 3 326 332 (HAYES)<br>* Totality * | | |
| A | US - A - 3 245 500 (HAMBLING)<br>* Totality * | | |
| A | GB - A - 1 002 558 (AUTOMOTIVE PRODUCTS)<br>* Totality * | | |
| A | GB - A - 996 612 (AUTOMOTIVE PRODUCTS)<br>* Totality * | | |
| A | GB - A - 971 796 (AUTOMOTIVE PRODUCTS)<br>* Totality * | | |

TECHNICAL FIELDS SEARCHED (Int. Cl. ³)

F 16 D 55/00
F 16 D 65/00

The present search report has been drawn up for all claims

| Place of search | Date of completion of the search | Examiner |
|---|---|---|
| VIENNA | 31-01-1984 | KAMMERER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82